# EUROPÄISCHE PATENTSCHRIFT

(11) **EP 2 810 592 B1**
(45) Veröffentlichungstag und Bekanntmachung des Hinweises auf die Patenterteilung: **29.06.2016**
(21) Anmeldenummer: 14170265.4
(22) Anmeldetag: 28.05.2014
(51) Int. Cl.: A47J 42/18, A47J 31/42

(54) **Kaffeemühle, insbesondere für eine automatische Kaffeemaschine**
Coffee-mill in particular for an automatic coffee machine
Moulin à café, notamment pour une machine à café automatique

(30) Priorität: 06.06.2013 CH 10782013
(43) Veröffentlichungstag der Anmeldung: 10.12.2014
(73) Patentinhaber: Steiner AG Weggis, 6353 Weggis (CH)
(72) Erfinder: Steiner, Adrian, 6353 Weggis (CH)
(74) Vertreter: Luchs, Willi

(56) Entgegenhaltungen:
- EP-A1- 0 761 150
- DE-A1- 3 903 018
- DE-U1-202009 006 208

## Beschreibung

Die Erfindung betrifft eine Kaffeemühle, insbesondere für eine automatische Kaffeemaschine, mit zwei gegeneinander drehbaren Mahlscheiben, deren axialer Zwischenabstand den Mahlgrad des zu erzeugenden Kaffeepulvers definiert.

Bei einer automatischen Kaffeemaschine gemäss der Druckschrift EP 0 761 150 ermöglicht eine darin integrierte Kaffeemühle die Kaffeezubereitung mit stets frisch gemahlenem Kaffeepulver. Diese Kaffeemühle ist in herkömmlicher Weise mit zwei gegeneinander drehbare Mahlscheiben ausgerüstet. Um den Mahlgrad, der die Korngrösse des Mahlgutes definiert, je nach Bedarf zu variieren, ist im Träger der einen Mahlscheibe ein im Mühlekörper ein- und ausschraubbares Gewinde vorgesehen, das bewirkt, dass der Abstand zwischen den Mahlscheiben durch manuelles Drehen des Trägers verstellbar ist. Eine genaue Einstellung und Konstanthaltung des Mahlgrads ist bei diesen Kaffeemühlen nicht möglich. Ausserdem ist die manuelle Handhabung von Nachteil.

Eine Mühle gemäss der Druckschrift DE-A-20 2009 006 208 bezieht sich auf eine Kornmühle. Es sind bei dieser ein antreibbarer unterer Mahlstein sowie ein drehfest gehaltener oberer Mahlstein in einem Mahlsteinträger angeordnet, wobei letzterer mittels mindestens einem seitlich an diesem in Wirkverbindung stehenden Exzenter höhenverstellbar ist. Zu diesem Zwecke sind beidseitig zu dem Mahlsteinträger je ein Exzenter und ein mit diesen verbundener Einstellbügel vorgesehen. Dieser obere Mahlstein sowie der Mahlsteinträger sind mit einer zentralen Öffnung versehen, durch welche von einem Einfülltrichter und einer Auslassöffnung das Mahlgut zwischen die Mahlsteine geführt wird. Ferner ist eine Bremsschraube zum Fixieren des Exzenters vorhanden. Eine solche Verstelleinrichtung eignet sich aber nicht für einen automatisierten Betrieb bei einer Kaffeemaschine.

Der Erfindung liegt die Aufgabe zugrunde, diese Nachteile zu vermeiden und eine Kaffeemühle der eingangs genannten Art zu schaffen, die mit konstruktiv einfachen Mitteln eine möglichst konstante Qualität des zubereiteten Kaffees gewährleistet.

Diese Aufgabe wird erfindungsgemäss durch die Merkmale des Anspruchs 1 gelöst.

Auf diese Weise ist es durch Drehen der Exzenterwelle möglich, den Mahlgrad der Kaffeemühle kontinuierlich zu regulieren, damit die Qualität des erzeugten Kaffees konstant bleibt.

Die Kaffeemühle ist erfindungsgemäss so aufgebaut, dass die beiden Mahlscheiben übereinander in einem Mühlenkörper gelagert sind, wobei die untere Mahlscheibe um eine vertikale Drehachse drehbar ist, während die obere Mahlscheibe undrehbar und durch die Exzenterwelle relativ zur unteren Mahlscheibe in Richtung der Drehachse verstellbar ist.

Hierbei ist es von Vorteil, wenn die drehfeste Mahlscheibe in einem im Mühlekörper axial verschiebbaren Mahlscheibenträger angeordnet ist und die Exzenterwelle horizontal durch den Mahlscheibenträger geführt ist. Dadurch ist sichergestellt, dass der Mahlscheibenträger durch die Exzenterwelle in vertikaler Richtung nach oben und unten bewegt wird. Um diese Beweglichkeit zu ermöglichen, ist es zweckmässig, die Exzenterwelle beidseitig mit axialzylindrischen Wellenteilen zu versehen, die in entsprechenden Bohrungen des Mühlenkörpers geführt sind.

Durch die beschriebene Konstruktion ist es möglich, den Antrieb der Exzenterwelle beidseitig der Exzenterwelle anzuordnen, sodass für beide Anordnungsmöglichkeiten nur eine Grundversion des Mühlenkörpers nötig ist.

Es ist auch im Sinne einer apparativ einfachen und präzisen Steuerung der Exzenterwelle vorteilhaft, wenn diese mit einem elektrischen Antrieb, vorzugsweise einem Elektromotor antreibbar ist. Anstelle des Elektromotors könnten auch andere ähnliche feinfühlig steuerbare Antriebe eingesetzt werden.

Es ist hierbei auf jeden Fall zweckmässig, wenn der Antrieb der Exzenterwelle mit einem eine ungewollte Mühlenverstellung verhindernden Haltemoment versehen ist.

Die Erfindung sieht auch die Möglichkeit vor, den Exzenterwellenantrieb in ein geschlossenes Regelsystem der Kaffeemaschine zu integrieren. Auf diese Weise kann die Exzenterwelle etwa nach einem vorab eingegebenen Programm weitgehend unabhängig von Eingriff einer Bedienungsperson gesteuert werden. So ist es auf diese Weise beispielsweise möglich, den für jede Kaffeesorte optimalen Mahlgrad selbsttätig einzustellen und ihn während des Mahlvorgangs entweder konstant zu halten oder nach Wunsch und Bedarf zu variieren.

Die Geometrie der Exzenterwelle ist erfindungsgemäss so gewählt, dass ihr Profil dem gewünschten Genauigkeitsgrad der Mühlenverstellung und dem Haltemoment des Antriebs und der Flächenpressung zum verstellbaren Mahlscheibenträger Rechnung trägt.

Die erfindungsgemässe Kaffeemühle hat einen kompakten Aufbau und kann leicht zusammen- und ausgebaut werden, etwa zum Reinigen oder Überholen der Maschine. Sie kann leicht nachträglich in vorhandene Kaffeemaschinen eingebaut oder sogar als autonomes Einzelgerät benutzt werden.

Die Erfindung ist nachfolgend anhand eines Ausführungsbeispiels unter Bezugnahme auf die Zeichnung näher erläutert. Es zeigen:
- Fig. 1: eine erfindungsgemässe Kaffeemühle, perspektivisch dargestellt,
- Fig. 2: die Kaffeemühle nach Fig. 1, in einer Explosionsansicht dargestellt,
- Fig. 3: einen Längsschnitt der Kaffeemühle nach Fig. 1, und
- Fig. 4: einen Querschnitt der Kaffeemühle.

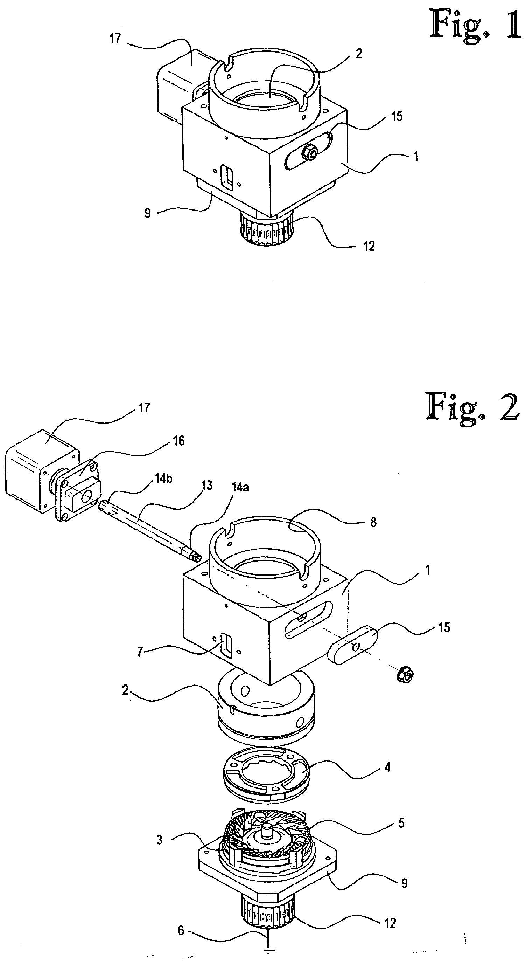

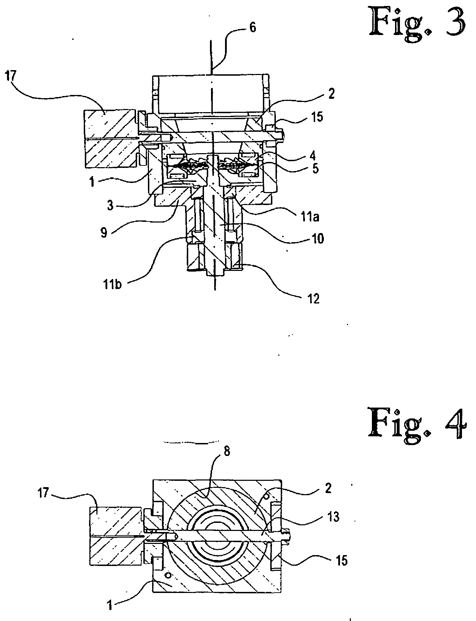

Die Kaffeemühle nach Fig. 1 bis Fig. 4 besteht aus einem Mühlenkörper 1 und Mahlscheibenträgern 2, 3 mit übereinanderliegenden Mahlscheiben 4 bzw. 5, von denen die untere Mahlscheibe um eine vertikale Drehachse 6 drehbar ist, während die obere Mahlscheibe 4 drehfest angeordnet ist. Der Mahlscheibenträger 2 der oberen Mahlscheibe 4 hat innen einen leicht konischen Querschnitt. Das erleichtert die Einführung der Kaffeebohnen in den Bereich zwischen den Mahlscheiben 4 und 5.

Der Mühlenkörper 1 ist mit einem Kaffeepulverdurchgang 7 versehen und weist einen hohlzylindrischen Innenraum 8 auf, in dem die beiden Mahlscheibenträger 2, 3 mit den Mahlscheiben 4, 5 gelagert sind. Unten ist dieser Mühlenkörper 1 mit einem Boden 9 abgeschlossen, durch welchen die Antriebswelle 10 der unteren Mahlscheibe 5 geführt ist. Die Antriebswelle 10 ist in einem Lagersatz 11a, 11b gelagert und mit einem Antrieb 12 antreibbar.

Bei der Montage wird der eine Mahlscheibenträger 3 mit der Mahlscheibe 5 an der im Boden 9 gelagerten Antriebswelle 10 festgeschraubt. Der andere Mahlscheibenträger 2 indes wird mit der Mahlscheibe 4 im Mühlenkörper 1 durch diese mit einem nicht näher gezeigten Sicherungselement gesicherten Exzenterwelle 13 zusammengehalten. Dadurch wird die Reinigung der Kaffeemühle vereinfacht. Auf diese Weise kann die Wartungszeit und der damit verursachte Betriebsunterbruch verkürzt werden.

Die Kaffeemühle nach Fig. 1 bis Fig. 4 ist erfindungsgemäss mit einer horizontal durch den oberen Mahlscheibenträger 2 geführten Exzenterwelle 13 ausgestattet, mit welcher die obere Mahlscheibe 4 relativ zur unteren Mahlscheibe 5 in Richtung der vertikalen Drehachse 6 verstellbar ist. Diese Anordnung ermöglicht eine Aufteilung der Bewegung, die der Exzenter verursacht. Der obere Mahlscheibenträger 2 bewegt sich nur in vertikaler Richtung. Er wird dabei vom Exzenter annähernd spielfrei nach oben und unten bewegt. Die horizontale Bewegung übernimmt einerseits die Lagerung des Antriebs und andererseits die Wellenaufnahme 15 auf der gegenüberliegenden Seite des Antriebs.

Die Exzenterwelle 13 weist beidseitig axialzylindrische Wellenabschnitte 14a, 14b auf, die in entsprechenden Bohrungen des Mühlenkörpers 1 bzw. einer darin eingebauten Verschlussplatte 15, 16 drehbar sind. Sie ist mit einem Elektromotor 17 antreibbar.

Aufgrund des beschriebenen Aufbaus ist es möglich, den Elektromotor 17 beidseitig an den Mühlenkörper 1 zu befestigen. Der erfindungsgemässe Aufbau ermöglicht somit nur einer Grundausführung des Mühlenkörpers mehrere Anordnungsvarianten des Antriebs, etwa in Anpassung an die räumlichen oder schalttechnischen Verhältnisse.

Anstelle des Elektromotors 17 könnte selbstverständlich auch ein anderer vorzugsweise elektrischer Antrieb eingesetzt werden, soweit mit ihnen eine ebenfalls stufenlose, feinfühlige Drehbewegung der Exzenterwelle bewirkt wird. Im Prinzip könnte aber auch anstelle eines Antriebsmotors eine Einrichtung mit einer Handverstellung vorgesehen sein.

Zwecks einer automatisierten Arbeitsweise bietet sich an, den Antrieb in einem geschlossenen Regelsystem der Kaffeemaschine zu integrieren. Auf diese Weise kann die Einrichtung weitgehend unabhängig von einer Bedienungsperson arbeiten, etwa nach einem vorgegebenen Programm in Abhängigkeit von der benutzten Kaffeesorte, dem gewünschten Mahlgrad und ähnlichen Parameter, die für die Qualität des erzeugten Kaffees massgeblich sind.

Die beschriebene Kaffeemühle kann auch nachträglich in vorhandene Kaffeemaschinen eingebaut werden. Sie kann auch als autonomes Einzelgerät, etwa als Küchengerät eingesetzt werden.

Die Erfindung könnte selbstverständlich noch durch andere Varianten realisiert sein. So könnte anstelle einer Exzenterverstellung als Stellglied für die Mahlscheibe auch eine Kurvenscheibe, eine Bolzen/NutVerbindung oder dergleichen vorgesehen sein. Die beiden Mahlscheiben könnten beim Mahlen auch relativ zueinander gedreht werden.

Die Kaffeemühle könnte auch horizontal mit einer horizontalen Drehachse der Mahlscheibe angeordnet sein.

## Patentansprüche

1. Kaffeemühle, für eine automatische Kaffeemaschine, mit zwei gegeneinander drehbaren Mahlscheiben (4, 5), deren axialer Zwischenabstand den Mahlgrad des produzierten Kaffeepulvers definiert, wobei eine Exzenterwelle (13) als Stellglied zum axialen Verstellen der einen Mahlscheibe (4) gegen die andere Mahlscheibe (5) vorgesehen ist, **dadurch gekennzeichnet, dass**
die Exzenterwelle (13) mit einem elektrischen Antrieb (17) antreibbar ist, welcher mit einem eine ungewollte Mühlenverstellung verhindernden Haltemoment versehen ist.

2. Kaffeemühle nach Anspruch 1, **dadurch gekennzeichnet, dass** die Mahlscheiben (4,5) übereinander in einem Mühlenkörper (1) gelagert sind, wobei die untere Mahlscheibe (5) um eine vertikale Drehachse (6) drehbar ist, während die obere Mahlscheibe (4) undrehbar und durch die Exzenterwelle (13) relativ zur unteren Mahlscheibe (5) in Richtung der vertikalen Drehachse (6) verstellbar ist.

3. Kaffeemühle nach Anspruch 2, **dadurch gekennzeichnet, dass** die drehfeste Mahlscheibe (4) in einem im Mühlenkörper (1) axial verschiebbaren Mahlscheibenträger (2) angeordnet und die Exzenterwelle (13) horizontal durch den Mahlscheibenträger geführt ist.

4. Kaffeemühle nach Anspruch 3, **dadurch gekennzeichnet, dass** die Exzenterwelle (13) beidseitig mit axialzylindrischen Wellenteilen (14a, 14b) versehen ist, die in entsprechenden Bohrungen des Mühlenkörpers (1) geführt sind.

5. Kaffeemühle nach einem der vorhergehenden Ansprüche 1 bis 4, **dadurch gekennzeichnet, dass**
der Antrieb (16) der Exzenterwelle (13) in ein geschlossenes Regelsystem integriert ist.

6. Kaffeemühle nach einem der vorhergehenden Ansprüche 1 bis 5, **dadurch gekennzeichnet, dass**
der Antrieb (17) beidseitig des Mühlenkörpers (1) anbringbar ist.

7. Kaffeemühle nach einem der vorhergehenden Ansprüche 1 bis 6, **dadurch gekennzeichnet, dass**
die Geometrie der Exzenterwelle (13) vom Genauigkeitsgrad der Mühlenverstellung und dem Haltemoment des Antriebes (17) und der Flächenpressung zum verstellbaren Mahlscheibenträger (2) bestimmt ist.

8. Kaffeemühle nach einem der vorhergehenden Ansprüche 1 bis 7, **dadurch gekennzeichnet, dass**
sie nachträglich in eine vorhandene Kaffeemaschine einbaubar ist.

## Claims

1. A coffee grinder, for an automatic coffee machine, comprising two grinding discs (4, 5) that can be rotated in opposite directions, the axial distance between which defines the degree of grinding of the coffee powder produced, whereby an eccentric shaft (13) as an actuator for axially adjusting the one grinding disc (4) relative to the other grinding disc (5) is provided, **characterised in that**
the eccentric shaft (13) can be driven by an electric drive (17), which is provided with a holding torque that prevents undesired adjustment of the grinder.

2. Coffee grinder according to Claim 1, **characterised in that** the grinding discs (4, 5) are mounted one over the other within a grinder body (1), whereby the lower grinding disc (5) being rotatable about a vertical axis of rotation (6), while the upper grinding disc (4) can be adjusted non-rotatably and by the eccentric shaft (13) relative to the lower grinding disc (5) in the direction of the vertical axis of rotation (6).

3. Coffee grinder according to Claim 2, **characterised in that** the non-rotatable grinding disc (4) is disposed in a grinding disc carrier (2) that can be shifted axially within the grinder body (1) and the eccentric shaft (13) is guided horizontally by the grinding disc carrier.

4. Coffee grinder according to Claim 3, **characterised in that** the eccentric shaft (13) is provided on both sides with axially cylindrical shaft parts (14a, 14b), which are guided within corresponding bore holes of the grinder body (1).

5. Coffee grinder according to any one of the preceding Claims 1 to 4, **characterised in that**
the drive (16) of the eccentric shaft (13) is integrated into a closed regulating system.

6. The coffee grinder according to any of the preceding Claims 1 to 5, **characterised in that**
the drive (17) can be attached to both sides of the grinder body (1).

7. Coffee grinder according to any of the preceding Claims 1 to 6, **characterised in that**
the geometry of the eccentric shaft (13) is determined by the precision degree of grinder adjustment and the holding torque of the drive (17) and the bearing pressure for the adjustable grinding disc carrier (2).

8. Coffee grinder according to any of the preceding Claims 1 to 7, **characterised in that**
it can be fitted subsequently in an existing coffee machine.

## Revendications

1. Moulin à café pour une machine à café automatique, comprenant deux disques (4, 5) de broyage, qui peuvent tourner l'un par rapport à l'autre et dont la distance axiale entre eux définit le degré de broyage de la poudre de café produite, un arbre (13) à excentrique étant prévu comme élément de réglage pour le déplacement axial de l'un des disques (4) de broyage par rapport à l'autre disque (5) de broyage, **caractérisé en ce que**
l'arbre (13) à excentrique peut être entraîné par un entraînement (17) électrique, qui est pourvu d'un couple de maintien empêchant un déplacement involontaire du moulin.

2. Moulin à café suivant la revendication 1, **caractérisé en ce que**
les disques (4, 5) de broyage sont montés l'un au-dessus de l'autre dans un corps (1) de broyage, le disque (5) inférieur de broyage pouvant tourner autour d'un axe (6) de rotation vertical, tandis que le disque (4) supérieur de broyage ne peut pas tourner et peut être déplacé dans la direction de l'axe (6) vertical de rotation par rapport au disque (5) inférieur de broyage par l'arbre (13) à excentrique.

3. Moulin à café suivant la revendication 2, **caractérisé en ce que**
le disque (4) de broyage fixe en rotation est monté dans un porte-disque de broyage (2) pouvant coulisser axialement dans le corps (1) de broyage et l'arbre (13) à excentrique est guidé horizontalement par le porte-disque de broyage.

4. Moulin à café suivant la revendication 3, **caractérisé en ce que**
l'arbre (13) à excentrique est pourvu des deux côtés de parties d'arbre (14a, 14b) à cylindricité axiale, qui sont guidées dans des alésages correspondants du corps (1) de broyage.

5. Moulin à café suivant l'une des revendications précédentes 1 à 4, **caractérisé en ce que**
l'entraînement (16) de l'arbre (13) à excentrique est intégré dans un système de régulation fermé.

6. Moulin à café suivant l'une des revendications précédentes 1 à 5, **caractérisé en ce que**
l'entraînement (17) peut être mis des deux côtés du corps (1) de broyage.

7. Moulin à café suivant l'une des revendications précédentes 1 à 6, **caractérisé en ce que**
la géométrie de l'arbre (13) à excentrique est définie par le degré de précision du réglage du moulin et par le couple de maintien de l'entraînement (17) et par la pression superficielle vers le porte-disque de broyage (2) réglable.

8. Moulin à café suivant l'une des revendications précédentes 1 à 7, **caractérisé en ce que**
il peut être inséré ultérieurement dans une machine à café existante.
